# EUROPEAN PATENT APPLICATION

(11) **EP 3 862 068 A1**
(43) Date of publication of application: **11.08.2021**
(21) Application number: 19916546.5
(22) Date of filing: 10.12.2019
(51) Int. Cl.: B01D 53/18, C01B 32/50

(54) **CARBON DIOXIDE FIXATION DEVICE**

(71) Applicant: Sorimachi, Kenji, Takasaki-shi, Gunma 370-0041 (JP); Shinko Sangyo Co., Ltd., Takasaki-shi Gunma 370-0871 (JP)
(72) Inventor: SORIMACHI Kenji, Takasaki-shi Gunma 3700041 (JP); KATO Hideaki, Takasaki-shi Gunma 3700849 (JP)
(74) Representative: J A Kemp LLP
(86) International application number: PCT/JP2019/048178
(87) International publication number: WO 2021/117116

(57) **Abstract**

The present invention provides a new carbon dioxide fixation apparatus. The carbon dioxide fixation apparatus (1) of the present invention includes: a first reaction vessel (10); a carbon dioxide fixing agent feeding unit (110); and a gas-liquid mixing unit. The first reaction vessel (10) can contain a carbon dioxide fixing agent, the carbon dioxide fixing agent feeding unit (110) can feed the carbon dioxide fixing agent into the first reaction vessel (10), and the gas-liquid mixing unit can mix a gas containing carbon dioxide into the carbon dioxide fixing agent.

## Description

### TECHNICAL FIELD

The present invention relates to a carbon dioxide fixation apparatus.

### BACKGROUND ART

As a carbon dioxide fixation apparatus, for example, Patent Literature 1 describes an apparatus for producing sodium carbonate by reacting an aqueous sodium hydroxide solution with a combustion exhaust gas containing carbon dioxide. However, new carbon dioxide fixation apparatuses are required.

### Citation List

### Patent Literature

Patent Literature 1: JPH6(1994)-263433 A

### SUMMARY OF INVENTION

### Technical Problem

With the foregoing in mind, it is an object of the present invention to provide a new carbon dioxide fixation apparatus.

### Solution to Problem

In order to achieve the above object, the present invention provides a carbon dioxide fixation apparatus, including: a first reaction vessel; a carbon dioxide fixing agent feeding unit; and a gas-liquid mixing unit, wherein the first reaction vessel can contain a carbon dioxide fixing agent, the carbon dioxide fixing agent feeding unit can feed the carbon dioxide fixing agent into the first reaction vessel, and the gas-liquid mixing unit can mix a gas containing carbon dioxide into the carbon dioxide fixing agent.

### Advantageous Effects of Invention

The present invention can provide a new carbon dioxide fixation apparatus.

### BRIEF DESCRIPTION OF DRAWINGS

[FIG. 1] FIG. 1 is a view showing an example of the carbon dioxide fixation apparatus of the first embodiment.
[FIG. 2] FIG. 2 is a schematic view showing an example of the carbon dioxide fixation apparatus of Variation 1.
[FIG. 3] FIG. 3 is a schematic view showing an example of the carbon dioxide fixation apparatus of Variation 2.
[FIG. 4] FIG. 4 is a view showing an example of the carbon dioxide fixation apparatus of the second embodiment.
[FIGs. 5A to 5C] FIGs. 5A to 5C are schematic views showing an example of the carbon dioxide fixation apparatus of the third embodiment.
[FIG. 6] FIG. 6 is a schematic view showing an example of the carbon dioxide fixation apparatus of the third embodiment.
[FIG. 7] FIG. 7 is a schematic view showing a carbon dioxide fixation apparatus of Examples.
[FIG. 8] FIG. 8 is a photograph of mixed liquids containing sodium hydroxide and calcium chloride before and after contact with carbon dioxide in Reference Example 1.
[FIG. 9] FIG. 9 is a graph showing the weight of the precipitate produced in the mixed liquid due to contact with carbon dioxide in Reference Example 1.
[FIG. 10] FIG. 10 is a graph showing the weight of the precipitate produced in the mixed liquid due to contact with carbon dioxide in Reference Example 1.
[FIG. 11] FIG. 11 is a graph showing the weight of the precipitate produced in the mixed liquid due to contact with carbon dioxide in Reference Example 2.
[FIG. 12] FIG. 12 is a graph showing the weight of the precipitate produced in the mixed liquid due to contact with carbon dioxide in Reference Example 2.
[FIG. 13] FIG. 13 is a graph showing the weight of the precipitate produced in the mixed liquid due to contact with carbon dioxide in Reference Example 3.
[FIG. 14] FIG. 14 is a graph showing the weight of the precipitate produced in the mixed liquid due to contact with carbon dioxide in Reference Example 4.
[FIG. 15] FIG. 15 is a schematic diagram illustrating a state where contact is performed by bubbling in Reference Example 5.
[FIG. 16] FIG. 16 is a graph showing the weight of the precipitate produced in the mixed liquid due to contact with carbon dioxide in Reference Example 5.
[FIG. 17] FIG. 17 is a schematic diagram illustrating the form of a pipe in Reference Example 5.
[FIG. 18] FIG. 18 is a graph showing the carbon dioxide concentration in the vessel after contact in Reference Example 5.
[FIG. 19] FIG. 19 is a graph showing the carbon dioxide concentration in the vessel after contact in Reference Example 5.
[FIG. 20] FIG. 20 is a graph showing the carbon dioxide concentration in the vessel after contact in Reference Example 5.
[FIG. 21] FIG. 21 is a graph showing the carbon dioxide concentration in the vessel after contact in Reference Example 5.
[FIG. 22] FIG. 22 is a graph showing the weight of the precipitate produced in the mixed liquid due to contact with carbon dioxide in Reference Example 6.
[FIG. 23] FIG. 23 is a graph showing the carbon dioxide concentration in the vessel after contact in Reference Example 6.
[FIG. 24] FIG. 24 is a graph showing the weight of the precipitate produced in the mixed liquid due to contact with carbon dioxide in Reference Example 7.

### DESCRIPTION OF EMBODIMENTS

In the carbon dioxide fixation apparatus of the present invention, for example, the gas-liquid mixing unit is inserted into the first reaction vessel, a plurality of holes are provided at an insertion end portion, and the gas can be discharged from the plurality of holes into the carbon dioxide fixing agent in the first reaction vessel.

In the carbon dioxide fixation apparatus of the present invention, for example, the gas-liquid mixing unit includes a liquid circulation flow path and a pump, the liquid circulation flow path includes a liquid suction end portion and a liquid discharge end portion, the liquid suction end portion and the liquid discharge end portion are inserted into the first reaction vessel, the pump can suck the carbon dioxide fixing agent from the liquid suction end portion and can discharge the sucked carbon dioxide fixing agent from the liquid discharge end portion.

In the carbon dioxide fixation apparatus of the present invention, for example, the liquid circulation flow path further includes a gas-liquid mixing member, and the gas-liquid mixing member can mix the gas into a liquid flowing through the liquid circulation flow path.

In the carbon dioxide fixation apparatus of the present invention, for example, the liquid suction end portion includes a filtration unit, and the filtration unit can remove a solid component contained in the carbon dioxide fixing agent.

The carbon dioxide fixation apparatus of the present invention further includes a second reaction vessel; and a vessel communication flow path, wherein the first reaction vessel and the second reaction vessel communicate with each other by the vessel communication flow path, and a liquid can be fed from the first reaction vessel to the second reaction vessel, for example.

In the carbon dioxide fixation apparatus of the present invention, for example, the first reaction vessel is disposed above the second reaction vessel.

In the carbon dioxide fixation apparatus of the present invention, for example, the vessel communication flow path includes a flow rate adjustment unit.

In the carbon dioxide fixation apparatus of the present invention, for example, the vessel communication flow path is inserted into the second reaction vessel, and the vessel communication flow path includes a solidified product separation unit at an insertion end portion, and the solidified product separation unit can separate a solid product contained in a liquid fed from the first reaction vessel, and the liquid after the separation can be fed from the vessel communication flow path into the second reaction vessel.

In the carbon dioxide fixation apparatus of the present invention, for example, the gas-liquid mixing unit includes a liquid circulation flow path and a pump, the liquid circulation flow path includes liquid suction end portions and a liquid discharge end portion, the liquid suction end portions are inserted into the first reaction vessel and the second reaction vessel, the liquid discharge end portion is inserted into the first reaction vessel, the pump can suck the carbon dioxide fixing agent from the liquid suction end portions of the first reaction vessel and the second reaction vessel and can discharge the sucked carbon dioxide fixing agent from the liquid discharge end portion of the first reaction vessel.

The carbon dioxide fixation apparatus of the present invention further includes a cooling unit, wherein the cooling unit can cool the carbon dioxide fixing agent after the reaction.

The carbon dioxide fixation apparatus of the present invention further includes a temperature retention unit, wherein the temperature retention unit can retain a temperature of the carbon dioxide fixing agent at 70°C or higher.

In the present invention, "fixation of carbon dioxide (also referred to as fixation)" means, for example, reducing the carbon dioxide concentration in a gas containing carbon dioxide by removing carbon dioxide from the gas.

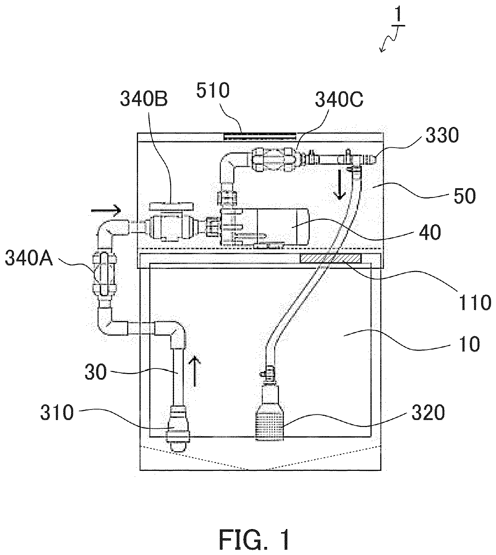

Embodiments of the present invention will be described below. The present invention, however, is not limited to the following embodiments. In FIGs. 1 to 24, identical parts are indicated with identical reference signs. Regarding the descriptions of the embodiments, reference can be made to one another unless otherwise stated. Furthermore, the configurations of the embodiments can be combined unless otherwise stated. Terms used in the present specification each have a meaning commonly used in the art, unless otherwise stated.

### First Embodiment

FIG. 1 is a view showing an example of a carbon dioxide fixation apparatus 1 of the present embodiment as viewed from the lateral direction. In FIG. 1, the inside of the carbon dioxide fixation apparatus 1 is shown in a perspective manner. As shown in FIG. 1, the carbon dioxide fixation apparatus 1 includes a first reaction vessel 10, a carbon dioxide fixing agent feeding unit 110, a liquid circulation flow path 30, and a pump 40.

In the carbon dioxide fixation apparatus 1 of the present embodiment, the first reaction vessel 10 can contain a carbon dioxide fixing agent. The carbon dioxide fixing agent feeding unit 110 can feed the carbon dioxide fixing agent into the first reaction vessel 10. The carbon dioxide fixation apparatus 1 includes the liquid circulation flow path 30 and the pump 40 as a gas-liquid mixing unit. The gas-liquid mixing unit can mix a gas containing carbon dioxide (CO₂) into the carbon dioxide fixing agent.

The first reaction vessel 10 is not particularly limited as long as it can contain a carbon dioxide fixing agent. The carbon dioxide fixing agent is, for example, a liquid containing at least one of sodium hydroxide (NaOH) and potassium hydroxide (KOH). The material, capacity, size, height, shape, and the like of the first reaction vessel 10 can be appropriately set. Examples of the material of the first reaction vessel 10 include plastic, glass, ceramics, and metal.

The carbon dioxide fixing agent may include at least one of sodium hydroxide and potassium hydroxide as a first fixing agent, and may further include at least one of a chloride of a Group 2 element (alkaline earth metal) and a chloride of a divalent metal element as a second fixing agent. At least one of the sodium hydroxide and the potassium hydroxide is, for example, sodium hydroxide. At least one of the chloride of a Group 2 element and the chloride of a divalent metal element is, for example, calcium chloride (CaCh).

The carbon dioxide fixing agent feeding unit 110 can feed the carbon dioxide fixing agent into the first reaction vessel 10. In the present embodiment, the carbon dioxide fixing agent feeding unit 110 is an opening of the first reaction vessel 10. The position of the opening is, for example, higher than the liquid level in the first reaction vessel 10. The position of the opening may be the upper surface of the first reaction vessel 10 as shown in FIG 1, or the opening may be the side surface of the first reaction vessel 10. Then, the carbon dioxide fixing agent can be fed from the opening, for example, by an operator or the like. The carbon dioxide fixing agent to be fed may be a liquid or a solid reagent with a solvent such as water, for example. However, the carbon dioxide fixing agent feeding unit 110 is not limited thereto, and may be a pipe, a hose, or the like for feeding the carbon dioxide fixing agent as described in the embodiments to be described below.

The liquid circulation flow path 30 is not particularly limited, and may be, for example, a pipe, a hose, or the like.

The liquid circulation flow path 30 includes a liquid suction end portion 310 and a liquid discharge end portion 320. The liquid suction end portion 310 and the liquid discharge end portion 320 are inserted into the first reaction vessel 10, and the pump 40 can suck the carbon dioxide fixing agent from the liquid suction end portion 310 and can discharge the sucked carbon dioxide fixing agent from the liquid discharge end portion 320.

In the present embodiment, the liquid circulation flow path 30 further includes an aspirator 330 as a gas-liquid mixing member, and the aspirator 330 can mix a gas containing carbon dioxide into a liquid flowing through the liquid circulation flow path 30. The aspirator 330 may use a jet of liquid to entrain the gas into the liquid. The aspirator may be, for example, one to which a hose for taking in the gas is attached. Specific examples of the aspirator include a metal aspirator (water jet pump) (product number: 1-689-02, manufactured by AS ONE Corporation.) and a metal aspirator (water jet pump) (product number: 1-689-04, manufactured by AS ONE Corporation.). The gas-liquid mixing member is not particularly limited, and may be, for example, a mixer or the like.

In the present embodiment, the liquid discharge end portion 320 is provided so as to reach the bottom of the first reaction vessel 10. In this manner, the liquid discharge end portion 320 may be provided at a lower part of the first reaction vessel 10. The "lower part" is only required be lower than the liquid level, and may be, for example, a position of the lower half of the space in the first reaction vessel 10. The present invention, however, is not limited thereto, and for example, as will be described below, the sucked liquid may be discharged from the liquid discharge end portion 320 to the liquid level of the carbon dioxide fixing agent contained in the first reaction vessel 10.

In the present embodiment, the liquid suction end portion 310 may include, for example, a filtration unit. The filtration unit can remove a solid component contained in the carbon dioxide fixing agent. The filtration unit is not particularly limited as long as it can remove a solid component contained in the carbon dioxide fixing agent. As for the filtration unit, for example, a commercially available strainer or the like can be appropriately used in accordance with the diameter of the pipe of the liquid circulation flow path 30 or the like. As a result, for example, a relatively large floater, a solidified precipitate, or the like can be prevented from flowing into the liquid circulation flow path 30, and failure of the pump 40 (e.g., breakage of the impeller) can be prevented.

The liquid discharge end portion 320 may be formed of, for example, plastic, ceramic, metal, or a porous material. The liquid discharge end portion 320 may be a member such as, for example, the liquid circulation flow path 30, the gas-liquid mixing member (e.g., the aspirator 330), or the like.

In the present embodiment, the liquid discharge end portion 320 may be provided with a plurality of holes, and is capable of discharging the carbon dioxide fixing agent from the plurality of holes into the carbon dioxide fixing agent in the first reaction vessel 10, for example. The number, size, and shape of the plurality of holes are not particularly limited, and may be appropriately set depending on the desired reaction rate, the pressure of the liquid to be discharged, and the like.

Further, the liquid discharge end portion 320 may be capable of horizontally injecting the gas, for example. Thus, for example, it is possible to make the contact time between the injected carbon dioxide fixing agent and the carbon dioxide fixing agent in the first reaction vessel 10 longer.

In the present embodiment, the liquid circulation flow path 30 includes flow rate adjustment units 340A to 340C. The flow rate adjustment units 340A to 340C are not particularly limited, examples thereof include cocks and valves.

The pump 40 can, for example, apply pressure to the liquid flowing through the liquid circulation flow path 30. The pump 40 is not particularly limited, and a general pump can be used.

The carbon dioxide fixation apparatus 1 of the present embodiment further includes a housing portion 50. The housing portion 50 may house a part of the liquid circulation flow path 30 (a portion including the aspirator 330), and the pump 40. The housing portion 50 is open at a vent 510 to allow air to be taken in. The material and the like of the housing portion 50 are, for example, the same as those of the first reaction vessel 10.

The carbon dioxide fixation apparatus 1 may further include a temperature retention unit, for example. The temperature retention unit can retain the temperature of the carbon dioxide fixing agent at a high temperature in the first reaction vessel 10, the liquid circulation flow path 30, the second reaction vessel 20 to be described below, the vessel communication flow path 60, and the like. The high temperature is, for example, 70 to 100°C, 70 to 80°C, 70°C or more, or 70°C.

The carbon dioxide fixation apparatus 1 may further include a cooling unit, for example. The cooling unit can cool the carbon dioxide fixing agent after the reaction in the first reaction vessel 10, the liquid circulation flow path 30, the second reaction vessel 20 to be described below, the vessel communication flow path 60, and the like. The cooling unit can cool the high-temperature liquid to 5°C to room temperature, for example. The high temperature is, for example, as described above.

According to the carbon dioxide fixation apparatus 1 of the present embodiment, for example, a reaction using the carbon dioxide fixing agent (e.g., a reaction using the first fixing agent and a reaction using the second fixing agent) can be performed in the first reaction vessel 10. Thereby, carbon dioxide can be fixed.

### Variation 1

In the carbon dioxide fixation apparatus 1 of present Variation, the pump 40 can suck the carbon dioxide fixing agent from the liquid suction end portion 310 and can discharge the sucked carbon dioxide fixing agent from the liquid discharge end portion 320 to the liquid level of the carbon dioxide fixing agent contained in the first reaction vessel 10. Except for this point, the configuration is the same as that of the first embodiment.

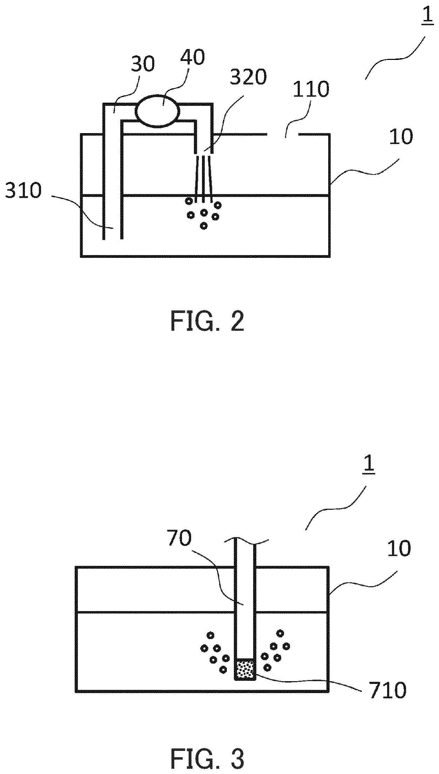

FIG. 2 is a schematic view showing an example of the carbon dioxide fixation apparatus 1 of the present Variation. In FIG. 2, the description of identical parts to those shown FIG. 1 may be omitted. As shown in FIG. 2, in the carbon dioxide fixation apparatus 1 of the present Variation, the liquid discharge end portion 320 of the liquid circulation flow path 30 is provided at the upper part of the first reaction vessel 10 facing the liquid surface. The pump 40 sucks the carbon dioxide fixing agent from the liquid suction end portion 310 and ejects the sucked carbon dioxide fixing agent from the liquid discharge end portion 320 to the liquid surface of the carbon dioxide fixing agent contained in the first reaction vessel 10.

As shown in FIG. 2, the liquid discharge end portion 320 of the liquid circulation flow path 30 is provided at the upper part of the first reaction vessel 10 facing the liquid surface (downward in FIG. 2), whereby the carbon dioxide fixing agent is forcefully ejected from the liquid discharge end portion 320 to the liquid surface of the carbon dioxide fixing agent contained in the first reaction vessel 10. Thus, since the gas present in the first reaction vessel 10 is entrained in the ejected carbon dioxide fixing agent, the carbon dioxide fixing agent and the gas can be mixed. The "upper part" may be higher than the liquid level, and may be, for example, a ceiling portion of the first reaction vessel 10, a position of the upper half of the space in the first reaction vessel 10, or the like.

In the present variation, the configuration for forcefully ejecting the sucked carbon dioxide fixing agent can be appropriately set by increasing the pressure applied by the pump 40, decreasing the size of the ejecting port of the liquid discharge end portion 320, or the like, instead of or in addition to the configuration of the liquid discharge end portion 320, for example.

The carbon dioxide fixation apparatus 1 of present Variation may include a gas intake unit for taking the gas into the first reaction vessel 10. The gas intake unit may be the carbon dioxide fixing agent feeding unit 110 or may be separately provided. The gas intake unit may be an opening provided in the first reaction vessel 10, or may be a pipe, a hose, or the like.

### Variation 2

The carbon dioxide fixation apparatus 1 of the present Variation includes, as the gas-liquid mixing unit, a gas feeding unit 70 instead of the liquid circulation flow path 30 and the pumps 40. Except for this point, the configuration is the same as that of the first embodiment.

FIG. 3 is a schematic view showing an example of the carbon dioxide fixation apparatus 1 of the present Variation. In FIG. 3, the description of identical parts to those shown FIG. 1 may be omitted. As shown in FIG. 3, in the carbon dioxide fixation apparatus 1 of the present Variation, the gas feeding unit 70 is inserted into the first reaction vessel 10, and a plurality of holes are provided at the insertion end portion 710, and a gas containing carbon dioxide can be fed from the plurality of holes into the carbon dioxide fixing agent in the first reaction vessel 10. Thus, the gas can be mixed into the carbon dioxide fixing agent.

The material, length, thickness, and shape of the gas feeding unit 70 can be appropriately set. The gas feeding unit 70 may have a tubular structure such as a pipe, a hose, or the like, for example.

The insertion end portion 710 can be formed of plastic, ceramic, metal, and a porous material, for example. The number, size, and shape of the plurality of holes are not particularly limited, and may be appropriately set according to a desired reaction rate, a gas pressure of the gas, and the like.

### Second Embodiment

The carbon dioxide fixation apparatus 1 of the present embodiment further includes a second reaction vessel 20 and a vessel communication flow path 60, and the first reaction vessel 10 and the second reaction vessel 20 communicate with each other by the vessel communication flow path 60, and a liquid can be fed from the first reaction vessel 10 to the second reaction vessel 20. Except for this point, the configuration is the same as that of the first embodiment.

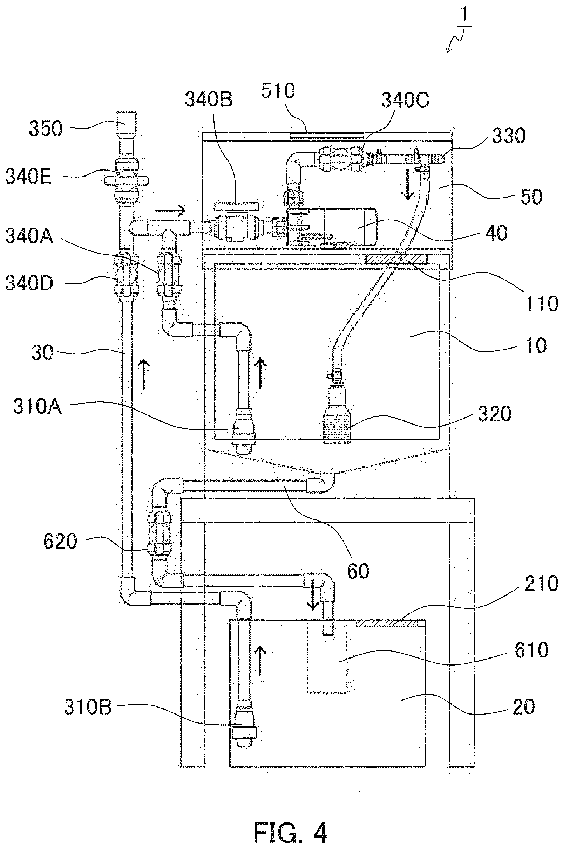

FIG.4 is a view showing an example of a carbon dioxide fixation apparatus 1 of the present embodiment as viewed from the lateral direction. In FIG.4, the inside of the carbon dioxide fixation apparatus 1 is shown in a perspective manner. As shown in FIG.4, the carbon dioxide fixation apparatus 1 includes a first reaction vessel 10, a carbon dioxide fixing agent feeding unit 110, a second reaction vessel 20, a vessel communication flow path 60, a liquid circulation flow path 30, and a pump 40.

In the carbon dioxide fixation apparatus 1 of the present embodiment, the first reaction vessel 10 can contain the carbon dioxide fixing agent. The carbon dioxide fixing agent feeding unit 110 can feed the carbon dioxide fixing agent into the first reaction vessel 10. The first reaction vessel 10 and the second reaction vessel 20 communicate with each other by the vessel communication flow path 60, and a liquid can be fed from the first reaction vessel 10 to the second reaction vessel 20. The carbon dioxide fixation apparatus 1 includes a liquid circulation flow path 30 and a pump 40 as the gas-liquid mixing unit. The gas-liquid mixing unit can mix the carbon dioxide fixing agent into a gas containing carbon dioxide.

The liquid circulation flow path 30 includes a liquid suction end portion 310A, a liquid suction end portion 310B, and a liquid discharge end portion 320, and the liquid suction end portion 310A and the liquid discharge end portion 320 are inserted into the first reaction vessel 10, and the pump 40 can suck the carbon dioxide fixing agent from the liquid suction end portion 310A and can discharge the sucked carbon dioxide fixing agent from the liquid discharge end portion 320. The liquid suction end portion 310B is inserted into the second reaction vessel 20, and the pump 40 can suck the carbon dioxide fixing agent from the liquid suction end portion 310B and can discharge the sucked carbon dioxide fixing agent from the liquid discharge end portion 320. In the carbon dioxide fixation apparatus 1, the liquid suction end portion 310B is optional and may not be included.

In the present embodiment, the liquid suction end portion 310A and 310B each include a filtration unit. The filtration unit is as described above.

In the present embodiment, the liquid circulation flow path 30 includes flow rate adjustment units 340A to 340D. The flow rate adjustment unit 340D is the same as the flow rate adjustment units 340A to 340C described above.

In the present embodiment, the liquid circulation flow path 30 includes a water supply unit 350. Water such as distilled water can be taken into the first reaction vessel 10 by the water supply unit 350. In the present embodiment, the liquid circulation flow path 30 further includes a flow rate adjustment unit 340E in the flow path from the water supply unit 350. The flow rate adjustment unit 340 E is the same as the flow rate adjustment units 340A to 340D described above. Thereby, whether or not water is supplied from the water supply unit 350, the amount of water supply, and the like can be adjusted.

The second reaction vessel 20 can contain the carbon dioxide fixing agent. The material, capacity, size, height, shape, and the like of the second reaction vessel 20 are not particularly limited, and are, for example, the same as those of the first reaction vessel 10.

In the present embodiment, the second reaction vessel 20 includes a carbon dioxide fixing agent feeding unit 210. The carbon dioxide fixing agent feeding unit 210 is the same as, for example, the carbon dioxide fixing agent feeding unit 110. Note that, in the carbon dioxide fixation apparatus 1, the carbon dioxide fixing agent feeding unit 210 is optional and may not be included.

In the present embodiment, the first reaction vessel 10 is disposed above the second reaction vessel 20. Thus, for example, liquid feeding from the first reaction vessel 10 to the second reaction vessel 20 can be performed using gravity. The present invention, however, is not limited thereto, and for example, the first reaction vessel 10 and the second reaction vessel 20 may be arranged side by side in the lateral direction.

The vessel communication flow path 60 is not particularly limited as long as it communicates the first reaction vessel 10 and the second reaction vessel 20, and examples thereof include pipes and hoses.

In the present embodiment, the vessel communication flow path 60 further includes a flow rate adjustment unit 620. Examples of the flow rate adjustment unit 620 include cocks, valves, and pumps. Thus, for example, after the reaction in the first reaction vessel 10 is completed, the carbon dioxide fixing agent after the reaction can be fed to the second reaction vessel 20. The flow rate adjustment by the flow rate adjustment unit 620 may be performed manually by an operator or the like, or may be controlled using a computer or the like, for example.

In the present embodiment, the vessel communication flow path 60 is inserted into the second reaction vessel 20. The vessel communication flow path 60 includes a solidified product separation unit 610 at the insertion end portion. The solidified product separation unit 610 separates a solid product contained in the liquid fed from the first reaction vessel 10, and the liquid after the separation can be fed from the vessel communication flow path 60 into the second reaction vessel 20. The solidified product separation unit 610 is, for example, a filter. The filter may be, for example, a so-called filter press system device that stacks filter cloths and applies pressure to filtrate, a device that places the filter cloths or cartridges in a strainer, or the like. For example, the filter may have a filtration degree of 1 µm or more or 1 µm.

Examples of the solid product include calcium carbonate (CaCO₃), calcium hydroxide (Ca(OH)₂), and sodium chloride (NaCl) as described below.

In the carbon dioxide fixation apparatus 1, the second reaction vessel 20 may further include, for example, a water feeding unit. The water feeding unit can feed distilled water into the second reaction vessel 20. Except for this point, the water feeding unit is the same as the carbon dioxide fixing agent feeding unit 110, for example. Thereby, for example, distilled water can be fed into the carbon dioxide fixing agent after the reaction in the first reaction vessel 10 by the water feeding unit, and then the reaction in the second reaction vessel 20 can be performed.

According to the carbon dioxide fixation apparatus 1 of the present embodiment, instead of or in addition to the ability to perform the reaction by the carbon dioxide fixation apparatus 1 of the first embodiment, the reaction using the first fixing agent among the reactions using the carbon dioxide fixing agent can be performed in the first reaction vessel 10, and after the reaction, the reaction liquid can be fed by the vessel communication flow path 60, and the reaction using the second fixing agent can be performed in the second reaction vessel 20, for example. Thereby, carbon dioxide can be fixed.

### Third Embodiment

In the carbon dioxide fixation apparatus 1 of the present embodiment, the carbon dioxide fixing agent feeding unit 110 and the carbon dioxide fixing agent feeding unit 210 each include a pipe for feeding the carbon dioxide fixing agent instead of the opening. Except for this point, the carbon dioxide fixation apparatus 1 of the present embodiment is the same as the carbon dioxide fixation apparatus 1 of the first and second embodiments.

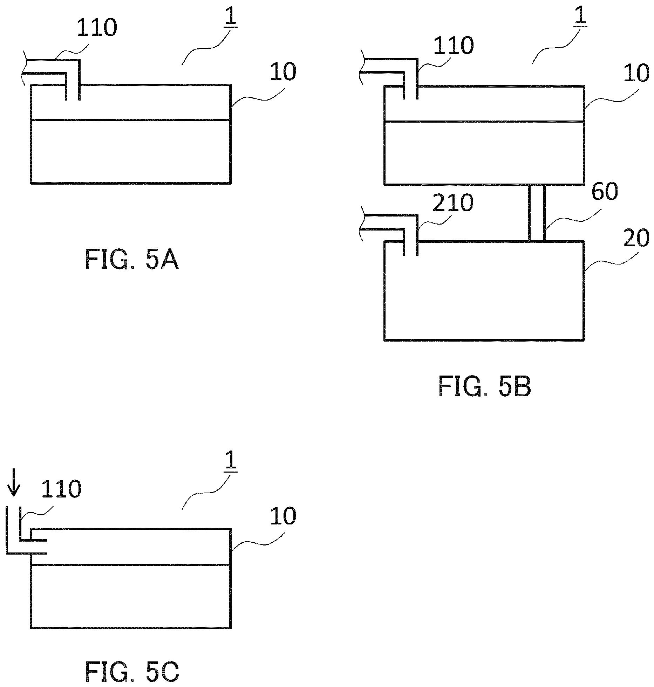

FIGs. 5A to 5C are schematic views showing an example of the carbon dioxide fixation apparatus 1 of the present embodiment. In FIGs. 5A to 5C, the description of identical parts to those shown FIGs. 1 and 4 may be omitted. As shown in FIG. 5A, the carbon dioxide fixing agent feeding unit 110 which is a pipe (hereinafter, also referred to as pipe 110) can feed the carbon dioxide fixing agent into the first reaction vessel 10. Further, as shown in FIG. 5B, further, the carbon dioxide fixing agent feeding unit 210 (hereinafter, also referred to as pipe 210) which is a pipe can charge the carbon dioxide fixing agent into the second reaction vessel 20.

The material, size, shape, and the like of the pipes 110 and 210 are not particularly limited. The positions of the pipes 110 and 210 are, for example, positions at which the carbon dioxide fixing agent can be fed from above the liquid surface in the first reaction vessel 10 and the second reaction vessel 20. The pipes 110 and 210 may be provided downward on the upper surfaces of the first reaction vessel 10 and the second reaction vessel 20 as shown in FIGs. 5A and 5B, or may be provided laterally on the side surfaces of the first reaction vessel 10 and the second reaction vessel 20 as shown in FIG. 5C. In FIG. 5C, one end of the L-shaped pipe 110 is provided laterally on the side surface of the first reaction vessel 10, and the other end of the pipe 110 is provided upward at the outside of the first reaction vessel 10, so that, for example, when an operator or the like feeds the carbon dioxide fixing agent as indicated by an arrow in FIG. 5C, the feeding is facilitated.

In the case of FIG.5A, the pipe 110 may be capable of feeding, as the carbon dioxide fixing agent, a mixed agent of the first fixing agent and the second fixing agent, the first fixing agent and the second fixing agent independently, or either the first fixing agent or the second fixing agent, for example.

In the case of FIG. 5B, in addition to the case of FIG. 5A, for example, the pipe 110 can feed the first fixing agent as the carbon dioxide fixing agent and the pipe 210 can feed the second fixing agent.

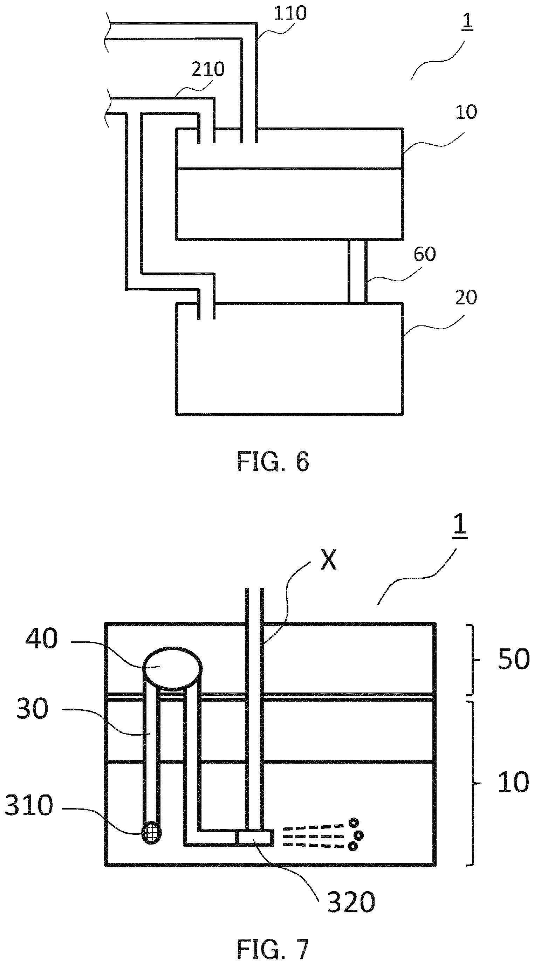

Next, FIG. 6 is a schematic view showing another example of the carbon dioxide fixation apparatus of the present embodiment. In FIG. 6, the description of identical parts to those shown FIG. 4 may be omitted. As shown in FIG. 6, the pipe 210 can further feed the carbon dioxide fixing agent into the first reaction vessel 10.

In the case of FIG. 6, for example, the pipe 110 may be capable of feeding the first fixing agent as the carbon dioxide fixing agent, and the pipe 210 may be capable of feeding the second fixing agent into any of the first reaction vessel 10 and the second reaction vessel 20.

The pipes 110 and 210 may each include a flow rate adjustment unit, for example. The flow rate adjustment unit is not particularly limited, and may be, for example, a cock, a valve, or the like. Thereby, first, the pipe 110 is opened to perform the reaction with the first fixing agent by feeding the first fixing agent, and then, the pipe 210 is opened to perform the reaction with the second fixing agent by feeding the second fixing agent, for example.

As described above, also by the carbon dioxide fixation apparatus 1 of the present embodiment, for example, carbon dioxide can be fixed in the same manner as in the first and second embodiments.

### Fourth Embodiment

Next, an example of the case in which the method for fixing carbon dioxide is performed using the carbon dioxide fixation apparatus 1 of the present embodiment will be described.

### First method for fixing carbon dioxide

First, the first method for fixing carbon dioxide will be described. The first method for fixing carbon dioxide includes a contact step of bringing a mixed liquid containing sodium hydroxide (NaOH) and further containing at least one of a chloride of a Group 2 element (alkaline earth metal) and a chloride of a divalent metal element into contact with a gas containing carbon dioxide (CO₂). In the contact step, the mixed liquid and the gas are brought into contact with each other by feeding the gas into the mixed liquid.

Examples of the Group 2 element include beryllium, magnesium, calcium, strontium, barium, and radium. Among them, the Group 2 element may be calcium, magnesium, strontium, or barium. Examples of the chloride of a Group 2 element include calcium chloride (CaCh), magnesium chloride, strontium chloride, and barium chloride.

The divalent metal element is not particularly limited, and may be, for example, zinc. The chloride of a divalent metal element may be, for example, zinc chloride.

The present invention will be described below with reference to an example in which calcium chloride is added as a chloride of the Group 2 element in the contact step. The present invention, however, is not limited thereto.

In other words, the first method for fixing carbon dioxide include a contact step of bringing a mixed liquid containing sodium hydroxide and further containing calcium chloride into contact with a gas containing carbon dioxide. In the contact step, the mixed liquid and the gas are brought into contact with each other by feeding the gas into the mixed liquid.

According to first method for fixing carbon dioxide of the present invention, carbon dioxide can be fixed by reacting sodium hydroxide and calcium chloride with carbon dioxide to produce calcium carbonate (CaCO₃). According to the present invention, for example, carbon dioxide can be fixed in a solid state. Thus, for example, carbon dioxide can be fixed in a more stable state. In addition, for example, handling is facilitated.

The gas containing carbon dioxide is not particularly limited, and examples thereof include flue gas, indoor air, and air.

The carbon dioxide concentration in the gas containing carbon dioxide is not particularly limited, and is, for example, 0 to 100%. As will be described below, according to the present invention, even carbon dioxide at a low concentration can be fixed. Further, since a white precipitate is formed in the mixed liquid by bubbling 100% carbon dioxide, the present invention brings about an effect even in carbon dioxide fixation at a high concentration.

The temperature of the gas containing carbon dioxide is not particularly limited, and may be, for example, a low temperature of 0°C or less, a common temperature of atmospheric temperature or room temperature, a temperature of less than 100°C, or a high temperature of 120°C to 200°C. It is to be noted that the temperature of the gas may be a low temperature from the viewpoint of preventing evaporation of water. The present invention, however, can be applied even if the gas containing carbon dioxide is high in heat, for example.

The gas containing carbon dioxide may contain, for example, a substance other than carbon dioxide. The substance other than carbon dioxide is not particularly limited, and examples thereof include SOx, NOx, O₂, and dust. In addition, in the present invention, since the mixed liquid is basically alkaline, for example, it is presumed that a neutralization reaction occurs between the mixed liquid and the acidic substance and the like. The present invention, however, is not limited thereto.

The mixed liquid contains sodium hydroxide and calcium chloride as described above. The method for producing the mixed liquid is not particularly limited, and may be, for example, low concentration mixing. The low concentration may be less than 5 N as the concentration of sodium hydroxide before the mixing, for example. By the low concentration mixing, for example, the precipitate of calcium hydroxide can be prevented from forming. Specifically, the mixed liquid can be produced, for example, by feeding a 0.1 N sodium hydroxide solution and a 0.1 mol/l calcium chloride solution into a vessel, and then mixing them.

In the mixed liquid, the concentration of the sodium hydroxide is not particularly limited, and is, for example, 0.01 N or more or 0.05 N or more and 0.2 N or less, less than 0.2 N, or 0.1 N or less. It is to be noted that the unit "N" of the concentration indicates a normality, and 0.01 N is 0.01 mol/l in the case of sodium hydroxide. When the concentration of the sodium hydroxide is 0.01 N or more or 0.05 N or more, for example, more carbon dioxide can be fixed. Further, when the concentration of the sodium hydroxide is less than 0.2 N or 0.1N or less, for example, more carbon dioxide can be fixed.

It is to be noted that, as will be mentioned in the reference examples described below, it is presumed that, when the concentration of the sodium hydroxide is 0.2 N or more, a precipitate of calcium hydroxide (Ca(OH)₂)) is produced due to the reaction between calcium chloride and high concentration sodium hydroxide in the contact, thereby decreasing the synthesis amount of calcium carbonate due to the contact.

In other words, this means that, according to the method for fixing carbon dioxide of the present invention, even when high concentration sodium hydroxide is contained in the mixed liquid, a precipitate of calcium hydroxide is produced due to the reaction between calcium chloride and the high concentration sodium hydroxide, so that it is possible to reduce the concentration of sodium hydroxide in the mixed liquid. Therefore, according to the method for fixing carbon dioxide of the present invention, even when high concentration (e.g., 0.2 N or more) sodium hydroxide is produced due to high heat, for example, the concentration thereof can be decreased and the generation of harmful gas can be suppressed.

In the mixed liquid, the concentration of the calcium chloride is not particularly limited, and is, for example, 0.005 mol/l or more or 0.05 mol/l or more and 0.5 mol/l or less, less than 0.5 mol/l, or 0.1 mol/l or less. When the concentration of the calcium chloride is within the above range, for example, more carbon dioxide can be fixed.

The temperature of the mixed liquid is not particularly limited, and is, for example, 30°C to 100°C, 70°C or more, 70°C to 80° C, or 70°C. In addition, according to the present invention, as described above, even when high concentration (e.g., 0.2 N or more) sodium hydroxide is produced due to high heat, for example, the concentration can be decreased. Thus, the present invention can be applied, for example, even if the mixed liquid is high in heat.

The pH of the mixed liquid is not particularly limited, and for example, the pH of the mixed liquid containing 0.05 N sodium hydroxide and 0.05 mol/l calcium chloride is about 12.

In the contact step, the mixed liquid is brought into contact with the gas containing carbon dioxide by feeding the gas into the mixed liquid, and "feeding" the gas can be also said as "bubbling" the gas, for example. It is to be noted that, the bubbling can be performed by ejecting carbon dioxide from the tip of the Pasteur pipette, for example. Further, for example, a bubbling device for aquarium organism (product name: Bukubuku, manufactured by Kotobuki Kogei Co., Ltd.) can be used. For example, a bubbling device (product name: Micro bubbler (F-1056-002) manufactured by Fron Industry Co., Ltd.) can also be used. The time for performing the bubbling may be appropriately set, for example, in a range in which the precipitate formed does not disappear by further reaction, and may be, for example, 5 to 60 seconds, 5 to 40 seconds, 5 to 30 seconds, 1 to 2 minutes, 1.5 hours, 9 hours, or 12 hours.

In the contact step, by feeding the gas into the mixed liquid, the gas can be fed into the mixed liquid as a bubble. The size (diameter) of the bubble depends on the size of the inlet through which the gas is fed, for example. When the gas is fed from a porous structure, the size of the bubble depends on the size of the pores of the porous structure, for example.

The size, number concentration, and the like of the bubbles (foam) can be appropriately set, and are not particularly limited. The size of the bubble can be, for example, of the order of centimeters, millimeters, micrometers, and nanometers. The bubble includes, for example, a fine bubble. The fine bubble is a bubble having a sphere equivalent diameter of 100 µm or less. The fine bubbles include microbubbles having a diameter of 1 to 100 µm and ultrafine bubbles (also referred to as nanobubbles) having a diameter of 1 µm or less. By setting the bubble to a small size such as a fine bubble, for example, the surface area of the bubble can be made larger, and the reaction in the contact step can be promoted. By setting the bubble to a size larger than that of the fine bubble, for example, the gas pressure required for the feeding of the gas can be reduced.

The size of the bubble can be measured, for example, by a general method. Specifically, for example, the size of the bubble can be measured by taking a photograph of the bubble with a predetermined scale, and comparing the size of the bubble in the photograph with the scale. Furthermore, particle size distribution measurement techniques such as laser diffraction and scattering methods, dynamic light scattering methods, particle trajectory analysis methods, resonant mass measurement methods, electrical detection band methods, dynamic image analysis methods, and light shielding methods can be utilized.

Next, a case in which the first method for fixing carbon dioxide is performed using the carbon dioxide fixation apparatus 1 of the second embodiment will be described. In the first method for fixing carbon dioxide, as described above, by feeding the gas into the carbon dioxide fixing agent, the carbon dioxide fixing agent and the gas containing carbon dioxide are brought into contact with each other. In other words, the case in which the gas feeding unit 70 described in Variation 2 of the first embodiment is used as the gas-liquid mixing unit is described. On the other hand, in the description below, the case in which the liquid circulation flow path 30 and the pump 40 are used as the gas-liquid mixing unit will be described, as an example.

First, a mixed liquid containing sodium hydroxide and further containing calcium chloride is fed as the carbon dioxide fixing agent from the carbon dioxide fixing agent feeding unit 110 of the first reaction vessel 10 (S101). The step (S101) may include, for example, a step of feeding the first fixing agent into the first reaction vessel 10 (S101 A) and a step of feeding the second fixing agent into the first reaction vessel 10 (S101B).

The pump 40 then sucks the carbon dioxide fixing agent from the liquid suction end portion 310A and discharges the sucked carbon dioxide fixing agent from the liquid discharge end portion 320 (S102). In the step (S102), as described above, a gas containing carbon dioxide is mixed into the carbon dioxide fixing agent flowing through the liquid circulation flow path 30 by the aspirator 330.

The time for performing the step (S102) may be, for example, the same as the time for performing the bubbling. The time for performing the step (S102) is, for example, 1 minute to 10 minutes or 2 minutes to 4 minutes.

As described above, carbon dioxide can be fixed by reacting the carbon dioxide fixing agent (mixed liquid containing sodium hydroxide and calcium chloride) with carbon dioxide to produce calcium carbonate.

Further, after the step (SI02), for example, the mixed liquid after the reaction may be fed from the first reaction vessel 10 to the second reaction vessel 20 via the vessel communication flow path 60 (S103). By performing the step (S103), for example, the solid product contained in the mixed liquid can be separated by the solidified product separation unit 610.

### Second method for fixing carbon dioxide

Next, the second method for fixing carbon dioxide will be described. The second method for fixing carbon dioxide includes a first contact step and a second contact step, wherein the first contact step brings a solution containing sodium hydroxide (NaOH) into contact with a gas containing carbon dioxide (CO₂), and the second contact step adds at least one of a chloride of a Group 2 element and a chloride of a divalent metal element to the solution after the first contact step. Regarding the second method for fixing carbon dioxide, for example, reference can be made to the description as to the first method for fixing carbon dioxide.

As described above, at least one of the chloride of the Group 2 element and the chloride of the divalent metal element is, for example, calcium chloride (CaCh).

That is, the second method for fixing carbon dioxide includes the first contact step and the second contact step, wherein the first contact step brings a solution containing sodium hydroxide into contact with a gas containing carbon dioxide, and the second contact step adds calcium chloride to the solution after the first contact step.

The first contact step may bring a solution containing sodium hydroxide into contact with a gas containing carbon dioxide. By the reaction between the sodium hydroxide and carbon dioxide in the first contact step, sodium hydrogen carbonate (NaHCO₃) or sodium carbonate (Na₂CO₃) is produced, and thus carbon dioxide can be fixed (absorbed).

In the first contact step, calcium chloride is not yet added. Therefore, according to the present invention, even when high concentration (e.g., 0.2 N or more) sodium hydroxide is used in the first contact step, for example, calcium hydroxide due to reaction with calcium chloride is not produced. Thus, in the subsequent second contact step, calcium hydroxide can be prevented from being produced due to the reaction between calcium chloride and a high concentration sodium hydroxide, and more carbon dioxide can be fixed.

The second contact step adds calcium chloride to the solution after the first contact step. By reacting hydrogen carbonate or sodium carbonate produced by the first contact step with calcium chloride by the second contact step, calcium carbonate is produced, and carbon dioxide can be fixed.

In the second contact step, contact with the gas containing carbon dioxide may be terminated. Further, the second contact step may be performed while contacting with the gas containing carbon dioxide.

In the second contact step, the concentration of the calcium chloride in the mixed liquid after the addition is not particularly limited, and is, for example, 0.005 mol/l or more or 0.05 mol/l or more, and 0.5 mol/l or less, less than 0.5 mol/l, or 0.1 mol/l or less. When the concentration of the calcium chloride is within the above range, for example, more carbon dioxide can be fixed.

In the second contact step, the pH of the mixed liquid after the addition is not particularly limited, and for example, the pH of the mixed liquid containing 0.05 N sodium hydroxide and 0.05 mol/l calcium chloride is about 12.

The method for fixing carbon dioxide of the present invention may further include a dilution step, wherein the dilution step may dilute the solution after the first contact step, for example. The method for diluting is not particularly limited, and for example, distilled water may be added. The proportion of the dilution can be appropriately set, and can be diluted to, for example, 1/10. By the dilution step, for example, the concentration of sodium hydroxide can be decreased to 0.2 N or less, less than 0.2 N, or 0.1 N or less.

Next, a case in which the second method for fixing carbon dioxide is performed using the carbon dioxide fixation apparatus 1 of the second embodiment will be described.

First, a solution containing sodium hydroxide is fed from the carbon dioxide fixing agent feeding unit 110 of the first reaction vessel 10 as the first fixing agent in the carbon dioxide fixing agent (S201).

The pump 40 then sucks the first fixing agent from the liquid suction end portion 310A and discharges the sucked first fixing agent from the liquid discharge end portion 320 (S202; the first contact step). In the step (S202), as described above, a gas containing carbon dioxide is mixed into the first fixing agent flowing through the liquid circulation flow path 30 by the aspirator 330.

The time for performing the step (S202) may be, for example, the same as the time for performing the step (S102).

Next, the first fixing agent after the reaction is fed from the first reaction vessel 10 into the second reaction vessel 20 via the vessel communication flow path 60 (S203).

Next, calcium chloride is added from the carbon dioxide fixing agent feeding unit 210 of the second reaction vessel 20 as the second fixing agent in carbon dioxide fixing agent (S204; the second contacting step).

As described above, carbon dioxide can be fixed by reacting sodium hydroxide and calcium chloride with carbon dioxide to produce calcium carbonate.

### Examples

Hereinafter, the present invention will be described with reference to examples and reference examples. It is to be noted, however, that the present invention is not restricted by the following examples and reference examples. Commercially available reagents were used based on their protocols unless otherwise mentioned.

It was examined that carbon dioxide can be fixed using a carbon dioxide fixation apparatus of the present invention.

A fixation apparatus for carbon dioxide shown in FIG. 7 was produced as follows. As the first reaction vessel 10, a plastic vessel having a size (a height of 73 cm, a depth of 41 cm, and a width of 51 cm) and a capacity of about 76 1 was used. The first reaction vessel 10 was installed in a metal rack (commercially available one). A hose (commercially available one) and a pipe (commercially available one) were used as the liquid circulation flow path 30, and the hose and the pipe were connected to the pump 40 (Iwaki Magnet Pump MD-100R-5M). The pump 40 was installed in the upper space of the rack (housing portion 50). A strainer (commercially available one) was connected to a liquid suction end portion 310 of the pipe, and an aspirator (product number: 1-689-04, manufactured by AS ONE Corporation.) was connected to a liquid discharge end portion 320 of the hose, and each of them was installed in the first reaction vessel 10. Further, the aspirator was connected to a hose X for gas intake, and the other end of the hose X was passed through the outside from the hole provided on the ceiling of the rack. As a result, the atmosphere taken in from the outside was taken in by the liquid in the liquid circulation flow path 30 by the aspirator, and was ejected from the liquid discharge end portion 320.

Further, a hole (diameter: 6cm) (not shown) was provided on the side surface of the upper space of the first reaction vessel 10 so as to be at a position of 7 cm from the liquid level, and a vinyl chloride pipe was passed through the hole to release the gas in the upper space out of the first reaction vessel 10. Then, the carbon dioxide concentration in the discharged gas was measured by the carbon dioxide monitor (GX-6000, manufactured by RIKEN KEIKI Co., Ltd.).

40 1 of water was fed into the first reaction vessel 10, 2 1 of a 1 N sodium hydroxide solution was fed by an operator. Immediately after the feeding, the pump 40 was operated to suck the solution from the liquid suction end portion 310 and to discharge the sucked solution from the liquid discharge end portion 320. Immediately thereafter, 2 1 of a solution containing 1 mol/l calcium chloride was fed by the operator. After the feeding, the lid of the first reaction vessel 10 was closed in order to prevent the gas from entering and leaving. The time point at which the solution containing the calcium chloride was fed was set as 0 minutes, and the elapsed time was measured.

As a result, the carbon dioxide concentration was 400 PPM at the feeding time point (0 minutes). Then, the carbon dioxide concentration dropped sharply immediately after the feeding, the carbon dioxide concentration at 20 seconds after the feeding was 280 PPM, the carbon dioxide concentration at 30 seconds after the feeding was 260 PPM, the carbon dioxide concentration at 40 seconds after the feeding was 220 PPM, the carbon dioxide concentration at 50 seconds after the feeding was 200 PPM, the carbon dioxide concentration at 60 seconds after the feeding was 180 PPM, the carbon dioxide concentration at 1 minute and 20 seconds after the feeding was 160 PPM, the carbon dioxide concentration at 1 minute and 40 seconds after the feeding was 140 PPM, the carbon dioxide concentration at 2 minutes after the feeding was 100 PPM, the carbon dioxide concentration at 2 minutes and 20 seconds after the feeding was 80 PPM, the carbon dioxide concentration at 2 minutes and 40 seconds after the feeding was 60 PPM, the carbon dioxide concentration at 3 minutes after the feeding was 40 PPM, and the carbon dioxide concentration at 3 minutes and 20 seconds after the feeding was 20 PPM. Then, the carbon dioxide concentration became 0 PPM at 3 minutes and 45 seconds after the feeding. Thereafter, when the measurement was performed until 10 minutes after the feeding, the carbon dioxide concentration was 0 PPM at any elapsed time.

As described above, it was verified that carbon dioxide can be fixed using the carbon dioxide fixation apparatus of the present invention.

### Reference Example 1

It was examined that carbon dioxide can be fixed by bringing a mixed liquid containing sodium hydroxide (NaOH) and calcium chloride (CaCh) into contact with a gas containing carbon dioxide (CO₂) by bubbling the gas into the mixed liquid in the vessel.

A 1 N sodium hydroxide solution (manufactured by Wako Pure Chemical Industries, Ltd.) was diluted with distilled water so as to have concentrations of 0.01, 0.02, 0.1, 0.2, and 0.4 N to prepare sodium hydroxide solutions having the respective concentrations. Further, a 1 mol/l calcium chloride solution (manufactured by Wako Pure Chemical Industries, Ltd.) was diluted with distilled water so as to have concentrations of 0.01, 0.02, 0.1, 0.2, and 1 (undiluted) mol/l to prepare calcium chloride solutions having the respective concentrations.

3 ml of each of the sodium hydroxide solutions of the respective concentrations and 3 ml of the 0.1mol/l calcium chloride solution were added to a 10 ml-test tube and mixed. Then, by bubbling carbon dioxide (CO₂ 100%, manufactured by KOIKE SANSO KOGYO CO., LTD.), the carbon dioxide was brought into contact with the mixed liquid. The bubbling was performed by ejecting carbon dioxide from the tip of a Pasteur pipette. The bubbling condition was 10 seconds (about 20 cm³). After the contact, the mixed liquid was centrifuged at 3000 rpm for 10 minutes. The sizes of the bubbles in the bubbling were visually measured by comparison with a scale and were on the order of millimeters to centimeters. Then, before and after the contact, the weight of the test tube was measured, and the difference in the weight between before and after the contact was calculated as the precipitation amount. It is to be noted that, as will be described below, when the precipitate is produced before contact with the carbon dioxide, the contact was carried out after removing the precipitate.

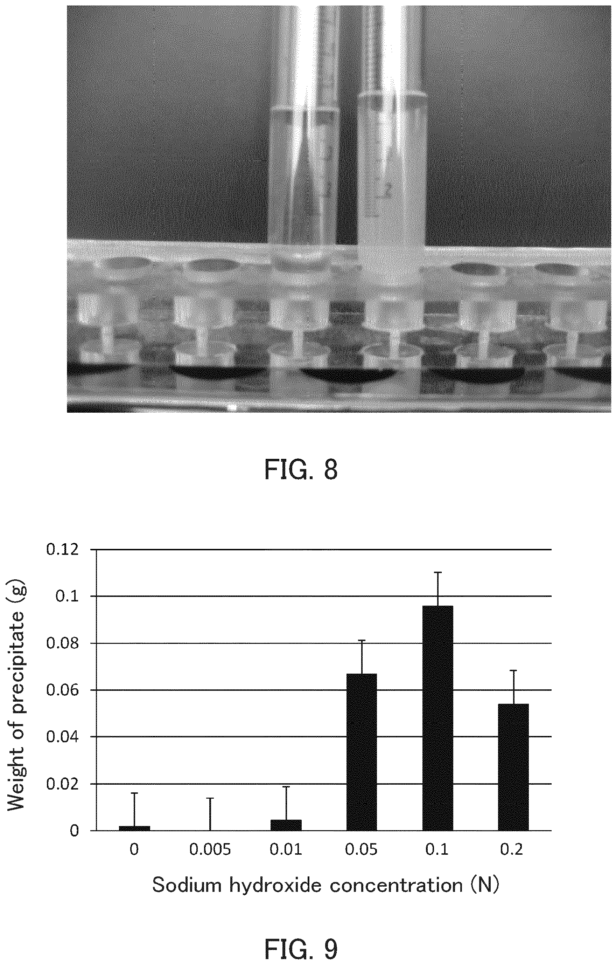

The results are shown in FIGs. 8 and 9. FIG. 8 is a photograph of mixed liquids containing 0.05 N sodium hydroxide and 0.05 mol/l calcium chloride before and after the contact with the carbon dioxide. In FIG. 8, the left test tube contains the mixed liquid before the contact and the right test tube contains the mixed liquid after the contact. As shown in FIG. 8, by bringing the mixed liquid into contact with the carbon dioxide, a white precipitate of calcium carbonate (CaCO₃) was produced in the mixed liquid. It is to be noted that, in the mixed liquid, a white turbidity was observed before the completion of bubbling for 10 seconds.

FIG. 9 is a graph showing the weight of the precipitate produced in the mixed liquid due to contact with the carbon dioxide. In FIG. 9, the vertical axis indicates the weight (g) of the precipitate per test tube, and the horizontal axis indicates the sodium hydroxide concentration (N) in the mixed liquid. It is to be noted that each value of the weight of the precipitate was an average value of measured values of a total of 5 samples of the mixed liquid. As shown in FIG. 9, as a result of bringing the mixed liquid into contact with the carbon dioxide, the precipitate was produced in the mixed liquid having the sodium hydroxide concentration of 0.01 N or more. The amount of the precipitate was greatly increased at the concentration of 0.05 N, and the amount of the precipitate was maximum at the concentration of 0.1 N. On the other hand, the amount of the precipitate was decreased at the concentration of 0.2 N as compared to the value at the concentration of 0.1 N. It was verified that more carbon dioxide could be fixed at the concentrations of 0.05 N to 0.2 N, and at the concentrations 0.05 N to 0.1 N.

It is to be noted that, when the sodium hydroxide concentration was 0.2 N, a white precipitate was formed in the mixed liquid before the contact with carbon dioxide. This white precipitate is considered to be calcium hydroxide (Ca(OH)₂) produced by the reaction between calcium chloride and high concentration sodium hydroxide. Therefore, as a reason why the precipitation amount was decreased at the concentration of 0.2 N, it is considered that calcium hydroxide was produced by the reaction between calcium chloride and high concentration sodium hydroxide, so that the synthesis amount of calcium carbonate due to the contact was decreased.

Next, the contact was carried out in the same manner as described above except that 3 ml of the 0.1 N sodium hydroxide solution and 3 ml of each of the calcium chloride solutions having respective concentrations were added and mixed to prepare the mixed liquid.

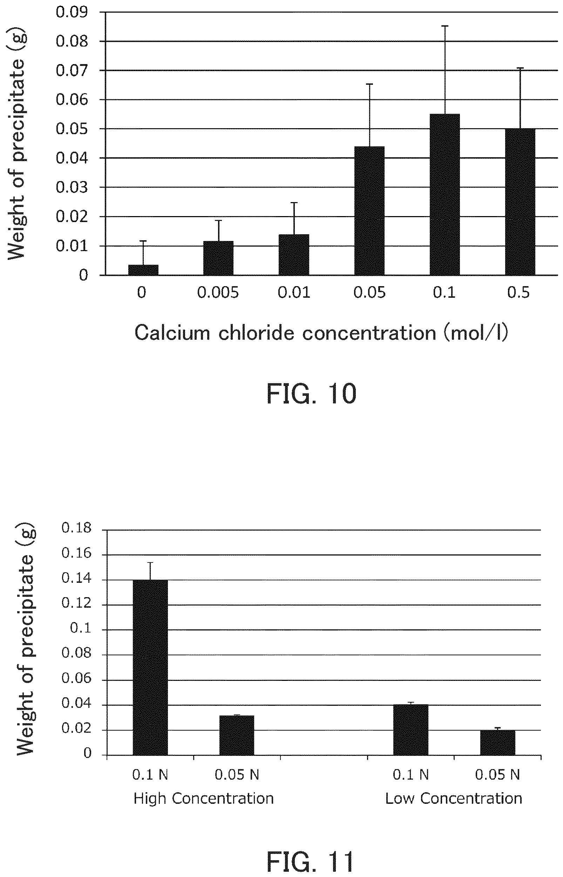

The results are shown in FIG. 10. FIG. 10 is a graph showing the weight of the precipitate produced in the mixed liquid due to contact with the carbon dioxide. In FIG. 10, the vertical axis indicates the weight (g) of the precipitate per test tube, and the horizontal axis indicates the calcium chloride concentration (mol/l) in the mixed liquid. It is to be noted that each value of the weight of the precipitate was an average value of measured values of a total of 5 samples of the mixed liquid. As shown in FIG. 10, the precipitate was produced at all calcium chloride concentrations as a result of bringing the mixed liquid into contact with carbon dioxide. The amount of the precipitate was greatly increased at the concentration of 0.05 mol/l, and the amount of the precipitate was maximum at the concentration of 0.1 mol/l. It was verified that more carbon dioxide could be fixed when the calcium chloride concentration was 0.05 mol/l to 0.5 mol/l.

It is to be noted that, when the calcium chloride concentration was 0.2 mol/l to 0.5 mol/l, formation of a white precipitate was observed in the mixed liquid before the contact with carbon dioxide. Then, this white precipitate was disappeared by adding carbon dioxide during the contact. On the other hand, when the calcium chloride concentration was 0.1 mol/l and 0.05 mol/l, a precipitate was formed in the mixed liquid, and even if the contact was carried out, the precipitate was not disappeared.

As described above, it was verified that carbon dioxide can be fixed by bringing a mixed liquid containing sodium hydroxide and calcium chloride into contact with a gas containing carbon dioxide by bubbling the gas into the mixed liquid in the vessel.

### Reference Example 2

It was examined that carbon dioxide can be fixed by a first contact step of bringing a solution containing sodium hydroxide (NaOH) into contact with a gas containing carbon dioxide (CO₂) and a second contact step of adding calcium chloride (CaCh) to the solution after the first contact step.

As a solution containing sodium hydroxide, a 1 N sodium hydroxide solution (manufactured by Wako Pure Chemical Industries, Ltd.) was used. Further, a 1 mol/l calcium chloride solution (manufactured by Wako Pure Chemical Industries, Ltd.) was diluted with distilled water to prepare a 0.1 mol/l calcium chloride solution.

5 ml of the 1 N sodium hydroxide solution (manufactured by Wako Pure Chemical Industries, Ltd.) was fed into a 10 ml-test tube, and, by bubbling carbon dioxide (CO₂ 100%, manufactured by KOIKE SANSO KOGYO CO., LTD.), the carbon dioxide was brought into contact with the solution (first contact step). The bubbling was performed by ejecting carbon dioxide from the tip of a Pasteur pipette. The bubbling condition was 2 cm³/sec for 40 seconds.

Next, the solution after the first contact was diluted with distilled water so as to have predetermined concentrations (0.1 N and 0.05 N). 3 ml of the diluted solution was fed into a 10 ml-test tube, and 3 ml of the 0.1 mol/l calcium chloride solution was added to the solution (second contact step). After the contact, the mixed liquid after the addition was centrifuged at 3000 rpm for 10 minutes. Then, before and after the contact, the weight of the test tube was measured, and the difference in the weight before and after the contact was calculated as the precipitation amount.

Then, in order to examine the concentration effect of sodium hydroxide on the absorption of carbon dioxide, the following experiment was conducted. The 1 N sodium hydroxide solution was diluted with distilled water so as to have predetermined concentrations (0.1 N and 0.05 N). 3 ml of sodium hydroxide solution having the predetermined concentration was fed into a 10 ml-test tube, and by bubbling carbon dioxide, the carbon dioxide was brought into contact with the solution (first contact step). The bubbling condition was 2 cm³/sec for 20 seconds. Then, 3 ml of the 0.1 mol/l calcium chloride solution was added to the solution (second contact step). After the addition, the precipitation amount was calculated in the same manner as described above.

The results are shown in FIG. 11. FIG. 11 is a graph showing the weight of the precipitate produced in the mixed liquid due to contact with the carbon dioxide. In FIG. 11, the vertical axis indicates the weight (g) of the precipitate per test tube and the horizontal axis indicates the experimental conditions. The left-hand graph shows the result of the first step using a 1 N sodium hydroxide solution ("High Concentration"), and the right-hand graph shows the result of the first step using the diluted sodium hydroxide solution ("Low Concentration"). It is to be noted that each value of the weight of the precipitate was an average value of measured values of 4 samples. As shown in FIG. 11, as a result of performing the first contact step and the second contact step, the precipitate was produced at either concentration in the first contact step. Furthermore, as the concentration in the first contact step increased, the larger the amount of the precipitate was produced.

Furthermore, it was verified that the sodium hydrogen carbonate (NaHCO₃) and sodium carbonate (Na₂CO₃) produced in the first step were reacted with calcium chloride in the second step to produce the precipitate.

A 0.5 mol/l calcium chloride solution was prepared in the same manner as described above. 1 ml of a 1 N sodium hydrogen carbonate solution (manufactured by Wako Pure Chemical Industries, Ltd.), 1 ml of distilled water, and 2 ml of the 0.5 mol/l calcium chloride solution were fed into a 10 ml-test tube and mixed using a vortex mixer. Thereafter, the precipitation amount of the produced precipitate was calculated in the same manner as described above.

Then, 2 ml of a 0.5 mol/l sodium carbonate solution (manufactured by Wako Pure Chemical Industries, Ltd.) and 2 ml of the 0.5 mol/l calcium chloride solution were mixed, and the precipitation amount of the produced precipitate was calculated in the same manner as described above.

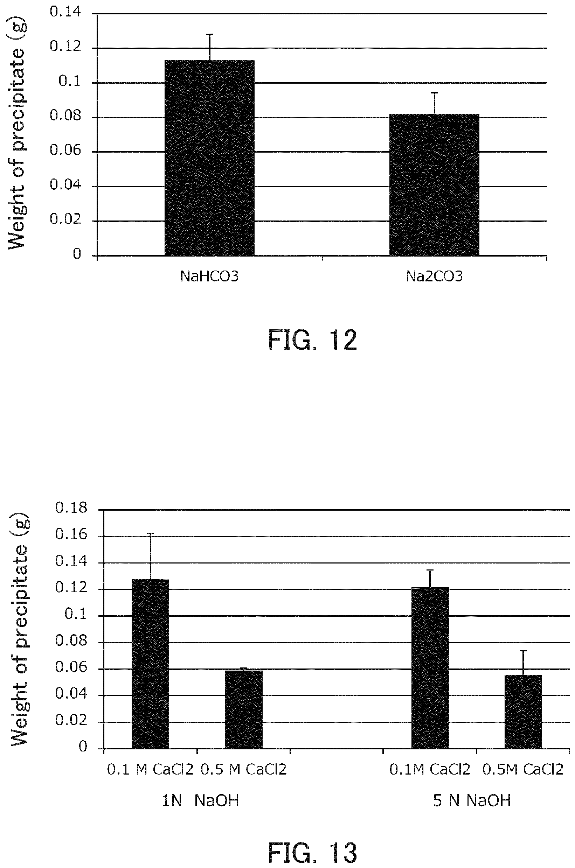

The results are shown in FIG. 12. FIG. 12. is a graph showing the weight of the precipitate produced in the mixed liquid due to contact with the carbon dioxide. In FIG. 12., the vertical axis indicates the weight (g) of the precipitate per test tube and the horizontal axis indicates the experimental conditions. It is to be noted that each value of the weight of the precipitate was an average value of measured values of a total of 4 samples. As shown in FIG. 12., each of the sodium hydrogen carbonate solution and the sodium carbonate solution produced a precipitate by reaction with the calcium chloride solution.

As described above, it was verified that carbon dioxide can be fixed by the first contact step of bringing a solution containing sodium hydroxide into contact with a gas containing carbon dioxide and the second contact step of adding calcium chloride to the solution and further bringing the mixed liquid after the addition into contact with the gas containing carbon dioxide after the first contact step. Further, it was verified that the sodium hydrogen carbonate and sodium carbonate produced in the first step were reacted with calcium chloride in the second step, resulting in precipitation.

### Reference Example 3

It was examined that carbon dioxide can be fixed even if the concentrations of the sodium hydroxide solution and the calcium chloride solution were changed.

In the same manner as in Reference Example 2, a 1 N sodium hydroxide solution was used. Further, as the solution containing sodium hydroxide, a 5 N sodium hydroxide solution (manufactured by Wako Pure Chemical Industries, Ltd.) was used. In addition, in the same manner as in Reference Example 2, the calcium chloride solutions having concentrations of 0.1 mol/l and 0.5 mol/l were prepared.

The first contact step and the second contact step were carried out in the same manner as in Reference Example 2 using the sodium hydroxide solutions having concentrations of 1 N and 5 N and the calcium chloride solutions having concentrations of 0.1 mol/l and 0.5 mol/l. Provided that, only when the 5 N sodium hydroxide solution was used, the bubbling time in the first contact step was set to 50 seconds instead of 20 seconds. Then, in the same manner as in Reference Example 2, the precipitation amount was calculated.

The results are shown in FIG. 13. FIG. 13 is a graph showing the weight of the precipitate produced in the mixed liquid due to contact with the carbon dioxide. In FIG. 13, the vertical axis indicates the weight (g) of the precipitate per test tube and the horizontal axis indicates experimental conditions. The left-hand graph shows the result of the first step using the 1 N sodium hydroxide solution (1N NaOH) and the right-hand graph shows the result of the first step using the 5 N sodium hydroxide solution (5N NaOH). In each graph, the left bar shows the result obtained by using the 0.1 mol/l calcium chloride solution (0.1M CaCh) and the right bar shows the result obtained by using the 0.5 mol/l calcium chloride solution (0.5M CaCh). It is to be noted that each value of the weight of the precipitate was an average value of measured values of a total of 5 samples. As shown in FIG. 13, the precipitate was produced at either concentration of the sodium hydroxide solution and the calcium chloride solution. As a result of setting the concentration of the sodium hydroxide solution to 1 N and 5 N, almost the same value was obtained between them. As a result of setting the concentration of the calcium chloride solution to 0.1 mol/l and 0.5 mol/l, the precipitation amount was about a half value at either concentration of the sodium hydroxide solution with the 0.5 mol/l calcium chloride solution as compared to the case with the 0.1 mol/l calcium chloride solution. It was examined that more carbon dioxide could be fixed by using the 0.1 mol/l calcium chloride solution.

As described above, it was verified that carbon dioxide can be fixed even if the concentrations of the sodium hydroxide solution and the calcium chloride solution were changed.

### Reference Example 4

It was examined that carbon dioxide can be fixed even if the contact time with a gas containing carbon dioxide in the first contact step was changed. In addition, a mixed liquid containing sodium hydroxide and calcium chloride was brought into contact with a gas containing carbon dioxide without performing the first contact step and the second contact step, and the results were compared.

A 1 N sodium hydroxide solution was used in the same manner as in Reference Example 2. Further, the 0.1 mol/l calcium chloride solution was prepared.

The first contact step was performed in the same manner as in Reference Example 2 except that the bubbling condition was 5, 10, 20, 30, or 60 seconds.

Next, 9 ml of distilled water was added to the solution after the first contact to dilute so as to achieve the concentration of about 0.1 N (approximate value based on the initial concentration). 3 ml of the diluted solution was fed into a 10 ml-test tube and 3 ml of the 0.1 mol/l calcium chloride solution was added to the solution (second contact step). After the contact, the mixed liquid was centrifuged in the same manner as in Reference Example 2. Then, in the same manner as in Reference Example 2, the precipitation amount was calculated.

As a comparative example, the following experiment was conducted. The 1 N sodium hydroxide solution was diluted with distilled water so as to achieve the concentration of 0.1 N. 3 ml of the 0.1 N sodium hydroxide solution and 3 ml of the 0.1 N calcium chloride solution were fed into a 10 ml-test tube and mixed, and, by bubbling carbon dioxide, the carbon dioxide was brought into contact with the mixed liquid in the same manner as described above. After the addition, the precipitation amount was calculated in the same manner as described above.

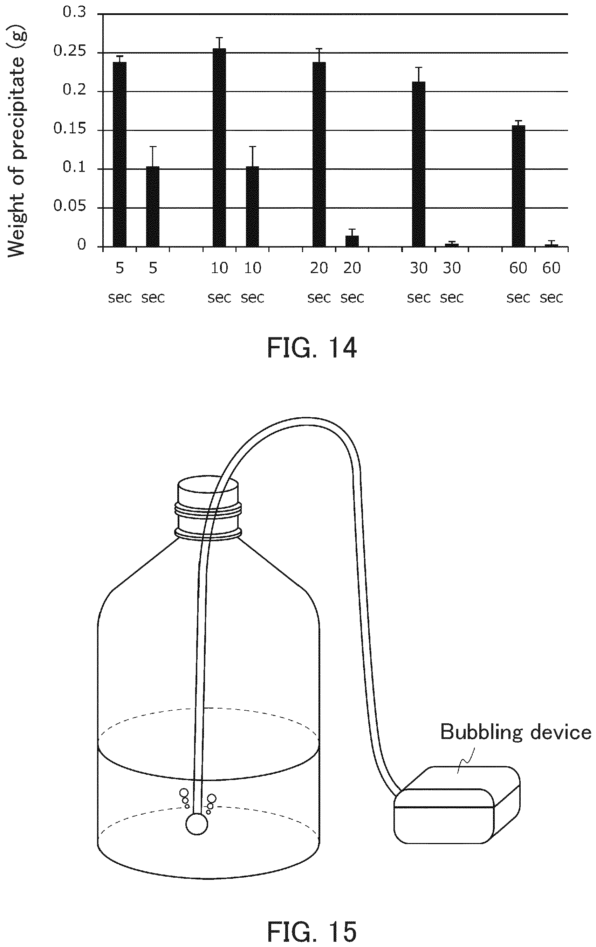

The results are shown in FIG. 14. FIG. 14 is a graph showing the weight of the precipitate produced in the mixed liquid due to contact with the carbon dioxide. In FIG. 14, the vertical axis indicates the weight (g) of the precipitate per test tube and the horizontal axis indicates the bubbling time. In each bubbling time, the left bar shows the result obtained by performing the first contact step and the second contact step and the right bar shows the result of the comparative example. It is to be noted that each value of the weight of the precipitate was an average value of a total of 3 measurements. As shown in FIG. 14, as a result of performing the first contact step and the second contact step, the precipitate was produced at either bubbling time. Approximately the same precipitation amount was obtained in the bubbling for 5 to 30 seconds. Even when bubbling was performed for 60 seconds, a sufficient precipitation amount was obtained, although it was slightly decreased. In the case of the comparative example, while the precipitate was produced in the bubbling for 5 to 10 seconds, the precipitation amount was less than or equal to half of the result of performing the first contact step and the second contact step. Moreover, the precipitation amount was greatly decreased when bubbling was performed for more than 20 seconds.

As described above, it was verified that carbon dioxide can be fixed even if the contact time with the gas containing carbon dioxide in the first contact step is changed. Furthermore, it was found that, when the first contact step and the second contact step are performed, carbon dioxide can be more efficiently fixed as compared to a case where a mixed liquid containing sodium hydroxide and calcium chloride is brought into contact with a gas containing carbon dioxide without performing the first contact step and the second contact step.

### Reference Example 5

It was examined that carbon dioxide can be fixed by bringing a mixed liquid containing sodium hydroxide and calcium chloride into contact with a gas containing carbon dioxide by bubbling the gas into the mixed liquid.

An equal amount of the 0.1 N sodium hydroxide solution and the 0.1 mol/l calcium chloride solution were mixed to prepare a mixed liquid containing the 0.05 N sodium hydroxide and the 0.05 mol/l calcium chloride. 500 ml of the mixed liquid was fed into a plastic bottle (commercially available one, 7.5 cm in width, 7.5 cm in depth, 12 cm in height). Then, as shown in FIG. 15, by bubbling air using a bubbling device for aquarium organism (product name: Bukubuku (one assembled from an air pump, a hose, and an air stone included in the set), manufactured by Kotobuki Kogei Co., Ltd.), the mixed liquid was brought into contact with the air. In FIG. 15, the inside of the plastic bottle is shown in a perspective manner. The bubbling was performed at 20 cm³/sec for 9 hours and 12 hours. The sizes of the bubbles in the bubbling were visually measured by comparison with a scale and were on the order of micrometers to millimeters. After the contact, 5 ml of the mixed liquid was acquired and centrifuged at 3000 rpm for 10 minutes, and then the weight of the precipitate was measured. In addition, an experiment was carried out in the same manner as described above except that a mixed air having a carbon dioxide concentration of 15% obtained by mixing the carbon dioxide into the air was used instead of the air and the bubbling was carried out for 1.5 hours.

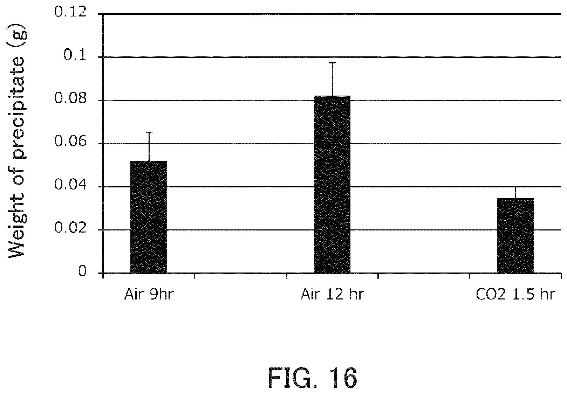

The results are shown in FIG. 16. FIG. 16 is a graph showing the weight of the precipitate produced in the mixed liquid due to contact with the carbon dioxide. In FIG. 16, the vertical axis indicates the weight (g) of the precipitate and the horizontal axis indicates experimental conditions. It is to be noted that each value of the weight of the precipitate was an average value of measured values of a total of 4 samples of the mixed liquid. As shown in FIG. 16, the precipitate was produced by the bubbling of the air and the mixed air. In the bubbling of the air, the amount of precipitate was increased with the elapse of time.

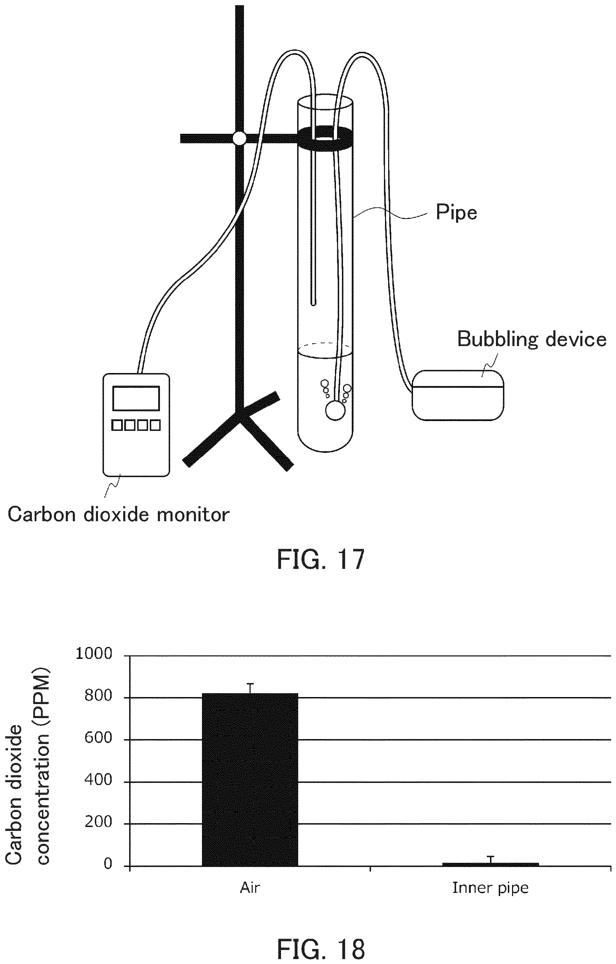

Next, the experiment was carried out using a vessel in a different form. As the vessel, a vinyl chloride pipe (commercially available one) having a diameter of 40 mm and a height of 50 cm was used instead of the plastic bottle. A pipe cap (commercially available one) was attached to one end serving as the bottom of the pipe. FIG. 17 is a schematic diagram for explaining the form of the pipe. It is to be noted that the inside of the pipe is shown in a perspective manner in FIG. 17. In addition, the 0.1 N sodium hydroxide solution and the 0.1 mol/l calcium chloride solution were prepared in the same manner as in Reference Example 1. 250 ml of the sodium hydroxide solution and 250 ml of the calcium chloride solution were fed into the pipe and, by bubbling air for about 1 minute, the mixed liquid was brought into contact with the air in the same manner as described above. After the contact, the carbon dioxide concentration of the gas in the upper space of the pipe (height: about 14 cm) was measured using a carbon dioxide monitor (RI-85, manufactured by RIKEN KEIKI Co., Ltd.). Further, the carbon dioxide concentration of the air was measured in the same manner.

The results are shown in FIG. 18. FIG. 18 is a graph showing the carbon dioxide concentration in the pipe after the contact. In FIG. 18 the vertical axis indicates the carbon dioxide concentration (PPM) and the horizontal axis indicates, from the left, the air (Air) and the gas in the upper space of the pipe (Inner Pipe). It is to be noted that each value of the carbon dioxide concentration was an average value of measured values of a total of 9 samples. As shown in FIG. 18, the carbon dioxide concentration in the pipe was greatly decreased by the contact.

Next, the experiment was carried out in the same manner as described above except that a mixed air having a carbon dioxide concentration of 10% obtained by mixing the carbon dioxide into the air was used instead of the air.

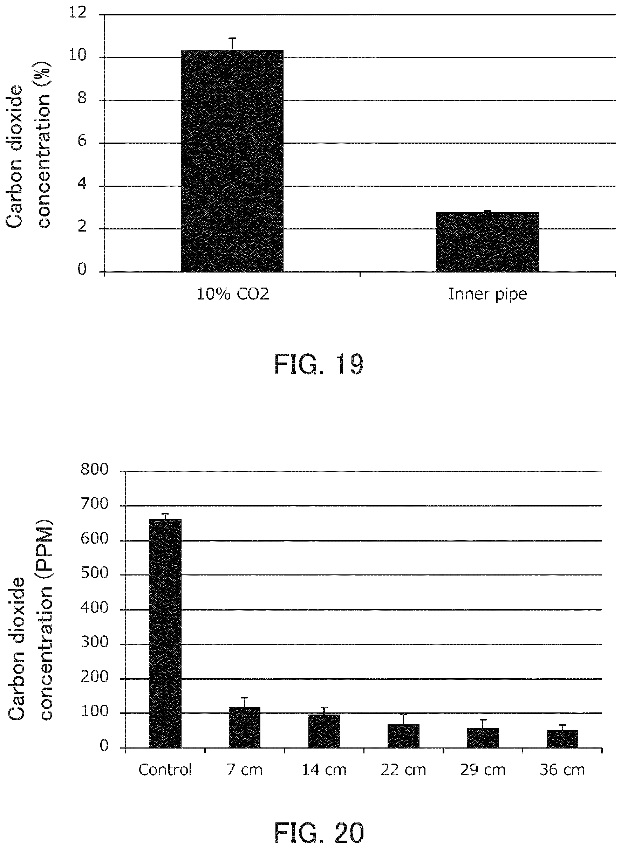

The results are shown in FIG. 19. FIG. 19 is a graph showing the carbon dioxide concentration in the pipe after the contact. In FIG. 19, the vertical axis indicates the carbon dioxide concentration (%) and the horizontal axis indicates, from the left, experimental conditions. It is to be noted that each value of the carbon dioxide concentration was an average value of measured values of a total of 3 samples. As shown in FIG. 19, the carbon dioxide concentration in the pipe was decreased by the contact.

Next, the experiment was carried out with a different amount of the mixed liquid. A mixed liquid containing the 0.05 N sodium hydroxide and the 0.05 mol/l calcium chloride was prepared in the same manner as described above. Each of 100 ml, 200 ml, 300 ml, 400 ml, and 500 ml of the mixed liquid was fed into the pipe, and, by bubbling air for 1 to 2 minutes, the mixed liquid was brought into contact with the air in the same manner as described above. In each of the above conditions, the heights of the liquid levels of the mixed liquids from the bottom surface of the pipe were 7, 14, 22, 29, and 36 cm. After the contact, the carbon dioxide concentration of the gas in the upper space of the pipe (about 10 cm from the upper end of the pipe) was measured in the same manner as described above. Further, the carbon dioxide concentration of the air was measured in the same manner as described above.

The results are shown in FIG. 20. FIG. 20 is a graph showing the carbon dioxide concentration in the pipe after the contact. In FIG. 20, the vertical axis indicates the carbon dioxide concentration (PPM) and the horizontal axis indicates, from the left, the air (Control) and the heights of the liquid level. It is to be noted that each value of the carbon dioxide concentration was an average value of measured values of a total of 3 samples. As shown in FIG. 20, the carbon dioxide concentration in the pipe was greatly decreased by the contact even when the height of the liquid level was 7 cm. Further, as the height of the liquid level (the amount of the mixed liquid) increased, the more carbon dioxide concentration was decreased.

Next, the experiment was carried out with a different form of the contact. A mixed liquid containing the 0.05 N sodium hydroxide and the 0.05 mol/l calcium chloride was prepared in the same manner as described above. 500 ml of the mixed liquid was fed into the pipe and, by bubbling air for 1 to 2 minutes, the mixed liquid was brought into contact with the air in the same manner as described above. On the other hand, the experiment was carried out in the same manner as described above except that the air stone connected to the tip of the hose of the bubbling device was taken out, and, by directly bubbling air from the hose (about 5 mm in diameter, made of silicon), the mixed liquid was brought into contact with the air. The sizes of the bubbles in the bubbling were visually measured by comparison with a scale and were on the order of millimeters to centimeters. After the contact, the carbon dioxide concentration was measured in the same manner as described above. Further, the carbon dioxide concentration of the air was measured in the same manner.

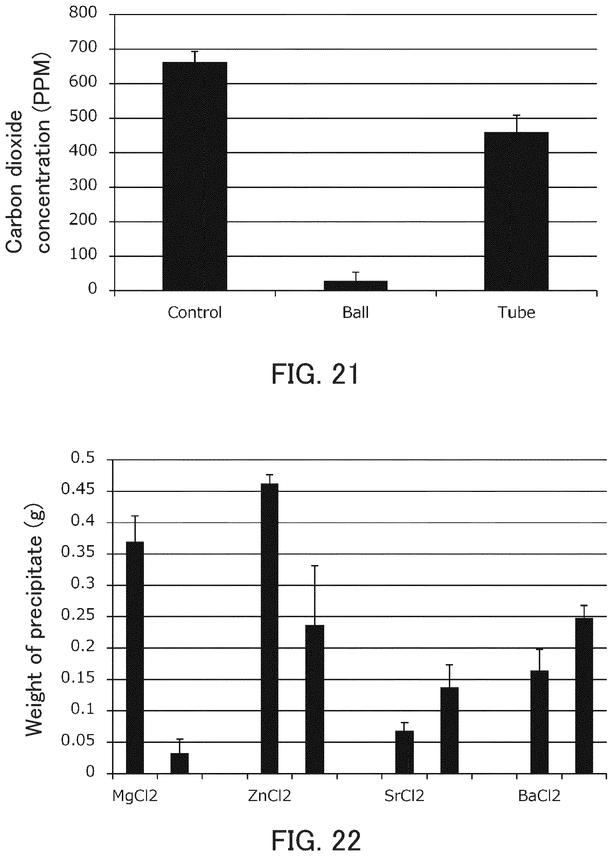

The results are shown in FIG. 21. FIG. 21 is a graph showing the carbon dioxide concentration in the pipe after the contact. In FIG. 21, the vertical axis indicates carbon dioxide concentrations (PPM) and the horizontal axis indicates, from the left, air (Control), bubbling from the air stone (Ball), and bubbling from the hose (Tube). It is to be noted that each value of the carbon dioxide concentration was an average value of measurement values of a total of 4 samples. As shown in FIG. 21, the carbon dioxide concentration in the pipe was greatly decreased (down to 4.27%) by bubbling air from the air stone. On the other hand, although the carbon dioxide concentration was decreased (down to 69.49%) by bubbling air from the hose, the amount of decrease was small compared with that by bubbling air from the air stone. From this, it was found that it is important that the sizes of bubbles are small in the bubbling in the absorption of carbon dioxide.

As described above, it was verified that carbon dioxide can be fixed by bringing a mixed liquid containing sodium hydroxide and calcium chloride into contact with a gas containing carbon dioxide by bubbling the gas into the mixed liquid.

### Reference Example 6

It was examined that carbon dioxide can be fixed by bringing a mixed liquid containing sodium hydroxide and further containing a chloride of a Group 2 element and a chloride of a divalent metal element into contact with a gas containing carbon dioxide.

As the chloride of a Group 2 element and the chloride of a divalent metallic element, magnesium chloride (MgCh; manufactured by Wako Pure Chemical Industries, Ltd.), zinc chloride (ZnCh; manufactured by Wako Pure Chemical Industries, Ltd.), strontium chloride (SrCh, manufactured by Wako Pure Chemical Industries, Ltd.), and barium chloride (BaCh; manufactured by Wako Pure Chemical Industries, Ltd.) were used. Each of the chlorides was diluted with distilled water to prepare 0.1 mol/l of each metal chloride solution. In addition, the 0.1 N sodium hydroxide solution was prepared in the same manner as in Reference Example 1.

2 ml of each of the metal chloride solutions and 1 ml of the sodium hydroxide solution were mixed. By bubbling carbon dioxide, the mixed liquid was brought into contact with the carbon dioxide in the same manner as in Reference Example 1. After the mixing and after contact with the carbon dioxide, the precipitation amount was calculated in the same manner as in Reference Example 1.

The results are shown in FIG. 22. FIG. 22 is a graph showing the weight of the precipitate produced in the mixed liquid due to contact with the carbon dioxide. In FIG. 22, the vertical axis indicates the weight (g) of the precipitate per test tube, and the horizontal axis indicates each metal chloride contained in the mixed liquid. Each left bar shows the result after the mixing and each right bar shows the result after contact with the carbon dioxide. It is to be noted that each value of the weight of the precipitate was an average value of measured values of a total of 4 samples of the mixed liquid. As shown in FIG. 22, when the magnesium chloride solution and the zinc chloride solution were used, the precipitation amount was increased greatly after the mixing, and the precipitation amount was decreased after contact with the carbon dioxide. Further, when the strontium chloride solution and the barium chloride solution were used, the precipitation amount was increased after the mixing, and the precipitation amount was further increased after contact with the carbon dioxide.

Next, the chloride of a Group 2 element and the chloride of a divalent metal element were used, and the carbon dioxide concentration after the contact was measured.

The pipe described in Reference Example 5 was used as the vessel. 50 ml of the 0.1 N sodium hydroxide solution and 50 ml of each metal chloride solution having a concentration of 0.1 mol/l were fed into the pipe, and, by bubbling air, the mixed liquid was brought into contact with the air in the same manner as in Reference Example 5. After the contact, the carbon dioxide concentration of the gas in the upper space of the pipe (about 14 cm in height) was measured in the same manner as in Reference Example 5. In the measurement, it was confirmed that the value of the carbon dioxide concentration became almost constant at 2 to 3 minutes after the contact, and this value was used as a measurement value. Further, as a control, the carbon dioxide concentration of the air was measured in the same manner.

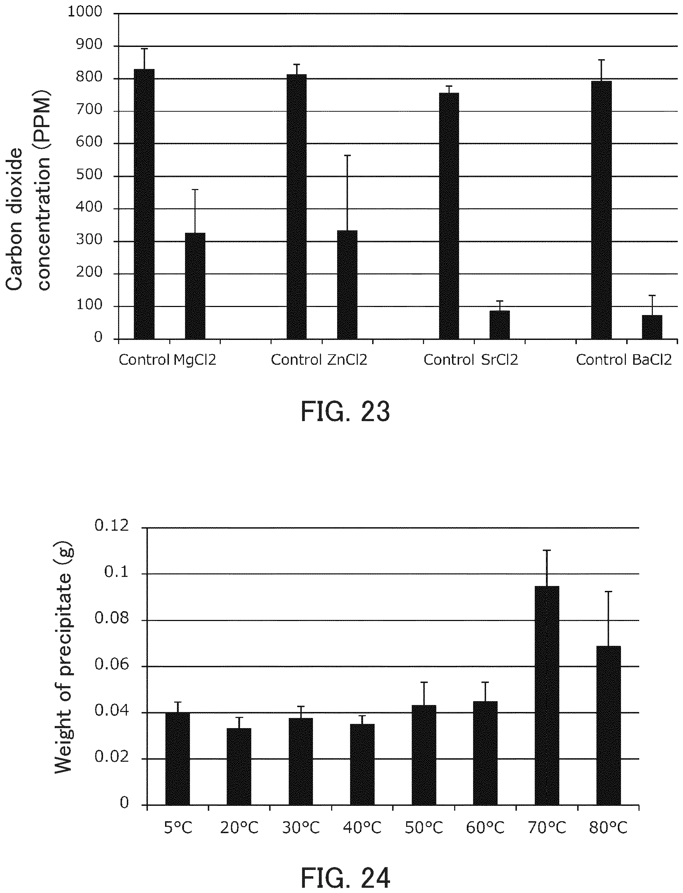

The results are shown in FIG. 23. FIG. 23 is a graph showing the carbon dioxide concentration in the pipe after the contact. In FIG. 23, the vertical axis indicates the carbon dioxide concentration (PPM) and the horizontal axis indicates metal chlorides. It is to be noted that the value of the carbon dioxide concentration was an average value of measured values of a total of 3 samples. As shown in FIG. 23, the carbon dioxide concentration in the pipe was decreased due to the contact with any type of the metal chlorides as compared to the value of the control. In particular, when the strontium chloride solution and the barium chloride solution were used, the carbon dioxide concentration was greatly decreased.

As described above, it was verified that carbon dioxide can be fixed by bringing a mixed liquid containing sodium hydroxide and further containing a chloride of a Group 2 element and a chloride of a divalent metal element into contact with a gas containing carbon dioxide.

### Reference Example 7

It was examined that carbon dioxide can be fixed by bringing a mixed liquid containing sodium hydroxide and calcium chloride into contact with a gas containing carbon dioxide under a predetermined temperature condition.

A mixed liquid containing the 0.05 N sodium hydroxide and the 0.05 mol/l calcium chloride was prepared in the same manner as in Reference Example 5. 3 ml of the sodium hydroxide solution of each concentration and 3 ml of the 0.1 mol/l calcium chloride solution were fed into a 10 ml-test tube and mixed, and, by bubbling carbon dioxide, the mixed liquid was brought into contact with the carbon dioxide in the same manner as in Reference Example 1. The bubbling was performed at 2 cm³/sec for 10 seconds. During the contact, the temperatures of the mixed liquids were maintained at 5°C, 20°C, 30°C, 40°C, 50°C, 60°C, 70°C, and 80°C, respectively, using Unithermo Shaker NTS-120, EYLEA, (Tokyo Rikakikai Co., Ltd.). After the contact, the precipitation amount was calculated in the same manner as in Reference Example 1.

The results are shown in FIG. 24. FIG. 24 is a graph showing the weight of the precipitate produced in the mixed liquid due to contact with the carbon dioxide. In FIG. 24, the vertical axis indicates the weight (g) of the precipitate per test tube, and the horizontal axis indicates the temperature. 3 to 5 experiments were carried out for each temperature, and the measured values of 4 to 8 samples were acquired in each experiment, the average of these measured values was determined to be the weight of the precipitate. As shown in FIG. 24, the precipitate was produced after contact with the carbon dioxide under any temperature condition. The precipitation amount was almost constant when the temperature of the mixed liquid was between 5°C and 60°C, and was greatly increased when the temperature of the mixed liquid was at 70°C. Even when the temperature of the mixed liquid was 80°C, the value of the precipitation amount was larger than the constant value obtained when the temperature of the mixed liquid was between 5°C and 60°C.

As described above, it was verified that carbon dioxide can be fixed by bringing a mixed liquid containing sodium hydroxide and calcium chloride into contact with a gas containing carbon dioxide under a predetermined temperature condition. In particular, it was verified that the fixation of the carbon dioxide is suitable for treatment at high temperatures.

While the present invention has been described above with reference to illustrative embodiments, the present invention is by no means limited thereto. Various changes and variations that may become apparent to those skilled in the art may be made in the configuration and specifics of the present invention without departing from the scope of the present invention.

### Industrial Applicability

As described above, the present invention can provide a new carbon dioxide fixation apparatus. Therefore, the present invention can be extremely useful in the disposal of combustion exhaust gas containing carbon dioxide and the like. The carbon dioxide fixation apparatus of the present invention can be applied to, for example, a thermal power station.

### Reference Signs List

- 10:: first reaction vessel
- 110:: carbon dioxide fixing agent feeding unit
- 20:: second reaction vessel
- 210:: carbon dioxide fixing agent feeding unit
- 30:: liquid circulation flow path
- 310, 310A,B:: liquid suction end portion
- 320:: liquid discharge end portion
- 330:: aspirator
- 340A,B,C,D,E:: flow rate adjustment unit
- 350:: water supply unit
- 40:: pump
- 50:: housing portion
- 510:: vent
- 60:: vessel communication flow path
- 610:: solidified product separation unit
- 620:: flow rate adjustment unit
- 70:: gas feeding unit
- 710:: insertion end portion

## Claims

1. A carbon dioxide fixation apparatus, comprising:
a first reaction vessel;
a carbon dioxide fixing agent feeding unit; and
a gas-liquid mixing unit, wherein
the first reaction vessel can contain a carbon dioxide fixing agent,
the carbon dioxide fixing agent feeding unit can feed the carbon dioxide fixing agent into the first reaction vessel, and
the gas-liquid mixing unit can mix a gas containing carbon dioxide into the carbon dioxide fixing agent.

2. The carbon dioxide fixation apparatus according to claim 1, wherein
the gas-liquid mixing unit is inserted into the first reaction vessel, a plurality of holes are provided at an insertion end portion, and the gas can be discharged from the plurality of holes into the carbon dioxide fixing agent in the first reaction vessel.

3. The carbon dioxide fixation apparatus according to claim 1, wherein
the gas-liquid mixing unit comprises a liquid circulation flow path and a pump,
the liquid circulation flow path comprises a liquid suction end portion and a liquid discharge end portion,
the liquid suction end portion and the liquid discharge end portion are inserted into the first reaction vessel, and
the pump can suck the carbon dioxide fixing agent from the liquid suction end portion and can discharge the sucked carbon dioxide fixing agent from the liquid discharge end portion.

4. The carbon dioxide fixation apparatus according to claim 3, wherein
the liquid circulation flow path further comprises a gas-liquid mixing member, and
the gas-liquid mixing member can mix the gas into a liquid flowing through the liquid circulation flow path.

5. The carbon dioxide fixation apparatus according to claim 3 or 4, wherein
the liquid suction end portion comprises a filtration unit, and
the filtration unit can remove a solid component contained in the carbon dioxide fixing agent.

6. The carbon dioxide fixation apparatus according to any one of claims 1 to 5, further comprising:
a second reaction vessel; and
a vessel communication flow path, wherein
the first reaction vessel and the second reaction vessel communicate with each other by the vessel communication flow path, and a liquid can be fed from the first reaction vessel to the second reaction vessel.

7. The carbon dioxide fixation apparatus according to claim 6, wherein
the first reaction vessel is disposed above the second reaction vessel.

8. The carbon dioxide fixation apparatus according to claim 6 or 7, wherein
the vessel communication flow path comprises a flow rate adjustment unit.

9. The carbon dioxide fixation apparatus according to any one of claims 6 to 8, wherein
the vessel communication flow path is inserted into the second reaction vessel, and the vessel communication flow path comprises a solidified product separation unit at an insertion end portion, and
the solidified product separation unit can separate a solid product contained in a liquid fed from the first reaction vessel, and the liquid after the separation can be fed from the vessel communication flow path into the second reaction vessel.

10. The carbon dioxide fixation apparatus according to any one of claims 6 to 9, wherein
the gas-liquid mixing unit comprises a liquid circulation flow path and a pump,
the liquid circulation flow path comprises liquid suction end portions and a liquid discharge end portion,
the liquid suction end portions are inserted into the first reaction vessel and the second reaction vessel,
the liquid discharge end portion is inserted into the first reaction vessel,
the pump can suck the carbon dioxide fixing agent from the liquid suction end portions of the first reaction vessel and the second reaction vessel and can discharge the sucked carbon dioxide fixing agent from the liquid discharge end portion of the first reaction vessel.

11. The carbon dioxide fixation apparatus according to any one of claims 1 to 10, further comprising:
a cooling unit, wherein
the cooling unit can cool the carbon dioxide fixing agent after the reaction.

12. The carbon dioxide fixation apparatus according to any one of claims 1 to 11, further comprising:
a temperature retention unit, wherein
the temperature retention unit can retain a temperature of the carbon dioxide fixing agent at 70°C or higher.
